# DEMANDE DE BREVET EUROPEEN

(11) **EP 4 616 701 A1**
(43) Date de publication de la demande: **17.09.2025**
(21) Numéro de dépôt: 25159897.5
(22) Date de dépôt: 25.02.2025
(51) Int. Cl.: A01G 7/00, A01G 31/00, C02F 1/20, C02F 103/08

(54) **PROCÉDÉ DE DÉSOXYGÉNATION PAR STRIPAGE D' AZOTE OU AUTRE MÉLANGE GAZEUX CONTENANT DE L' AZOTE ET DE L' HYDROGÈNE POUR FAVORISER LES CULTURES DE VÉGÉTAUX EN PRÉSENCE D' EAU SALÉE**

(30) Priorité: 12.03.2024 FR 2402470
(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide France Industrie, 75007 Paris (FR)
(72) Inventeur: COUSIN, Franck, 59810 Lesquin (FR); PATHIER, Didier, Shanghai, 201108 (CN)
(74) Mandataire: Air Liquide

(57) **Abrégé**

Procédé de culture de végétaux, où les végétaux sont alimentés en eau durant des phases d'irrigation de durée déterminée, l'eau mise en œuvre étant une eau salée ou saumâtre, eau qui comporte une teneur donnée en oxygène dissous, se caractérisant en ce que l'on procède, avant l'arrivée de l'eau au poste d'utilisation par l'installation de culture de végétaux, à une étape de stripage de tout ou partie de l'oxygène dissous par de l'azote ou un mélange d'azote et d'hydrogène.

## Description

La présente invention s'intéresse au domaine de la culture de végétaux et notamment de fruits et légumes.

On le sait, l'agriculture mondiale fait actuellement face à une réduction des surfaces cultivables causée par l'avancée de l'eau de mer dans les terres, avancée qui conduit à un enrichissement en sel de certains sols.

Les sols riches en sel deviennent impropres à l'agriculture du fait de plusieurs phénomènes parmi lesquels :
- Le fait que le sel rend l'eau et ses nutriments difficilement accessibles aux plantes (pression hydrique / pression osmotique).
- Le fait que le sel provoque un stress oxydatif sur les plantes.

Ce problème a donné lieu à de très nombreuses recherches au niveau mondial, se basant sur la génétique des plantes et visant à lutter contre ce phénomène par le développement de nouvelles variétés résistantes aux sols salés.

Comme on le verra plus en détails dans ce qui suit, la présente invention s'attache à proposer une nouvelle solution technique de culture en milieux salés, constituant une alternative ou un complément aux solutions génétiques évoquées ci-dessus. Cette solution doit pouvoir s'appliquer seule ou en complément des autres techniques.

Un des objectifs à la base de la présente invention n'est pas nécessairement d'obtenir une solution permettant par exemple de cultiver des tomates dans de l'eau de mer (environ 35 g/l NaCl) mais de repousser les limites de tolérance au sel des plantes et ainsi de remettre en culture des surfaces aujourd'hui considérées comme impropres à l'agriculture.

La présente solution consiste alors à lutter notamment contre l'effet oxydatif créé par l'eau salée en désoxygénant l'eau d'irrigation par une injection d'un gaz approprié, notamment par une injection d'azote gazeux, ou d'hydrogène ou d'un mélange de ces deux gaz.

On applique alors un procédé dit « de stripage » de l'oxygène dissous par une injection d'azote ou d'un autre gaz, pour désoxygéner des eaux d'irrigation saumâtres ou salées. On dit en français selon les dictionnaires classiques en vigueur « stripage » ou « striping » pour qualifier ces opérations de balayage, d'entrainement, de l'oxygène dissous dans l'eau.

On peut bien évidemment envisager d'autres gaz que l'azote, tels l'argon ou l'hélium mais pour des raisons bien évidentes de coût, les autres gaz ne sont pas privilégiés dans le cadre de la présente invention.

L'utilisation de l'hydrogène et de son effet réducteur, ou de mélanges comportant de l'hydrogène, permettra d'aller plus loin dans la lutte contre l'effet oxydatif.

Rappelons le contexte. L'agriculture est on le sait très gourmande en eau. Pourtant, s'il y a une dépense en eau dont on peut difficilement se passer, c'est bien celle-ci, qui nourrit des populations entières.

D'où la question bien connue qui se pose : pour réduire le stress hydrique et continuer à cultiver pendant les sécheresses, pourrait-on utiliser l'eau de mer qui représente 97,5% de nos ressources en eau.

Agriculteurs, entrepreneurs et scientifiques s'intéressent alors depuis longtemps à la culture de plantes comestibles capables de pousser dans l'eau salée.

Paradoxalement, une plante qui pousse les pieds dans l'eau de mer est dans la même situation que celle qui pousse en zone aride : elle manque d'eau. Présent en trop grande quantité, le sel limite l'absorption de l'eau par les racines. Soulignons que les doses auxquelles il devient toxique varient d'une plante à l'autre. On trouve ainsi certains végétaux, qualifiés d'halophytes, qui offrent pour leur part une remarquable adaptation aux milieux salés.

Le stress hydrique actuel dans de nombreuses régions du monde (nord de la Chine, Inde et Pakistan, pays du Moyen-Orient, ouest des Etats-Unis , Sahel...) et l'aggravation de la pollution de l'eau douce par l'agriculture et l'industrie ne pourront qu'aboutir à des pénuries d'eau de plus en plus fréquentes et générales.

Les experts considèrent qu'une personne dans le monde sur dix vit dans une région de stress hydrique élevé ou critique.

Ainsi en Afrique, quand on évoque la question de l'eau, c'est en termes de besoin ou d'abondance. Un seul puits productif peut faire toute la différence entre un village vivant et un village moribond.

Et ainsi un village dont le puits ne délivre que de l'eau salée contraint la plupart de ses résidents à l'abandonner et à se reloger plus près d'une source d'eau sûre.

Par ailleurs, on considère qu'une eau saumâtre est une eau dont la teneur en sel est inférieure à celle de l'eau de mer. La concentration totale de sel dissous y est généralement comprise entre 1 et 10 g/l alors qu'elle est (en moyenne) de 35 g/l pour l'eau de mer. Les pays anglo-saxons considèrent qu'une eau est saumâtre à partir d'un degré de salinité compris entre 0,05 % et 1,8 %, ou dans certains cas jusqu'à 3 %.

On sait que l'Agrocenter dans le désert du Néguev en Israël fait des recherches pour trouver les meilleures cultures et variétés pour la production dans ce désert en utilisant de l'eau saumâtre qui est disponible dans la région. L'objectif de ce centre de recherche en agriculture est de partager leurs connaissances avec les agriculteurs du monde, et notamment avec de fortes coopérations de ce centre avec des pays africains.

Pour la production des légumes, l'eau saumâtre est notamment mélangée avec de l'eau douce qui vient du centre de dessalement d'Ashkelon. Cette eau douce ne contient pas d'éléments nutritifs ni de minéraux. L'eau saumâtre est chargée de minéraux, mais contient également beaucoup de sel, dix fois plus que dans l'eau douce. Ils pratiquent des mélanges des deux, pour savoir ce qui marche le mieux pour les plantes. Pouvoir mettre plus d'eau saumâtre signifie une production moins chère, ce qui est meilleur pour l'agriculteur.

Les plantes, quel que soit leur type, absorbent l'eau du sol par leurs racines. Cela se produit grâce au processus connu sous le nom d'osmose, qui est contrôlé par le niveau de sels dans l'eau du sol et dans l'eau contenue dans la plante. Si la teneur en sel du sol est supérieure à celle de la plante, l'eau passe de la plante au sol. En conséquence, la plante se déshydrate et meurt lentement. Bien entendu, chaque plante a des besoins différents, ce qui implique des niveaux de sel différents. L'utilisation de l'eau de mer pour l'irrigation est possible, mais avec prudence. Les racines des plantes peuvent absorber l'eau lorsqu'elle est modérément salée, mais elles doivent travailler dur pour y parvenir. Si le sel est utilisé en forte concentration, cela stresse les plantes et entraîne une perte de rendement. Il est également important de noter que tous les types de sol contiennent des sels en quantités différentes. Ils sont essentiels au développement de chaque plante. Les céréales sont tolérantes aux sels présents dans le sol. Les seules cultures de cette famille qui ne l'apprécient pas sont le maïs et le riz.

Arroser les tomates avec de l'eau salée est également possible. En fait, elles bénéficient d'une augmentation de la salinité. Les carottes, les aubergines, les poivrons et les asperges sont d'autres légumes qui peuvent être arrosés avec de l'eau de mer. Les autres légumes sont modérément sensibles et il faut donc être prudent avec eux ou éviter complètement d'ajouter de l'eau de mer autour de leurs tiges.

S'agissant de l'arrosage de pelouses, on considère généralement qu'à faible concentration (environ jusqu'à 50 %), l'eau de mer stimule la croissance de la pelouse, la rendant plus épaisse et plus verte. Mais une fois dépassée cette concentration, il y a un risque de l'assécher.

Malgré sa toxicité chez les plantes, l'ion sodium (Na+) est aussi un nutriment, en particulier lorsque l'ion potassium (K+) est en faible concentration dans le sol. La concentration de K+ dans le sol de l'ordre du millimolaire permet une croissance optimale des plantes. La disponibilité des ions K+ dans la solution du sol, lentement libérés par les particules du sol et les argiles, est souvent limitante pour une croissance optimale dans la plupart des écosystèmes naturels. Quand la concentration en K+ dans le sol est très basse, de l'ordre de la micromolaire, le Na+ peut le substituer dans certaines fonctions vitales, comme son rôle de soluté pour maintenir l'osmolarité dans la cellule .

Environ 90% du K+ est stocké dans la vacuole où il y assure un rôle osmotique. Confiné dans la vacuole, le Na+ peut jouer ce même rôle ; la cellule mobilise alors le K+ dans le cytosol où il y assure son rôle métabolique. Un système de transport du Na+ spécifiquement exprimé lorsque la concentration en K+ dans le sol est faible permettrait d'absorber le Na+ dans la plante pour cet usage bénéfique . Le Na+ peut ainsi stimuler la croissance des plantes, à de faibles concentrations.

Les plantes halophiles peuvent avoir besoin de certaines concentrations en NaCl pour croître correctement, comme chez Atriplex vesicaria (arbuste d'Australie proche cousin de l'obione Halimione portulacoïdes présent dans les prés salés en France), Echinochloa utilis (millet japonais) ou Portulaca grandiflora (un pourpier).

Les plantes tolérantes au sel sont donc appelées « halophile » ce qui signifie « qui aime le sel ». On appelle « halophyte » toute plante vivant en contact avec des concentrations anormalement fortes de sel. Ce sont typiquement les plantes de bords de mer, de déserts, marais ou lacs salés, par exemple. Dans les marais salants on rencontre ainsi les salicornes (Salicornia sp.), qui regroupent une trentaine d'espèces comestibles, et sur les dunes l'euphorbe maritime (Euphorbia paralias), le chiendent des sables (Elymus farctus) ou le magnifique lys de mer (Pancratium maritimum). Sous d'autres latitudes en climat tropical humide et équatorial, la végétation des mangroves qui pousse les racines dans l'eau saumâtre illustre bien les capacités de tolérance à la salinité d'herbes ou d'arbustes halophiles.

Les halophytes peuvent tolérer des concentrations en sel de l'ordre de 500 mM à 1 M, en exacerbant l'efficacité des mécanismes de gestion de la toxicité de l'ion sodium Na+. Certaines plantes comme la salicorne nécessitent cet ion pour pouvoir croître, ce sont les halophytes strictes.

Ces écosystèmes pourtant ingrats se prêtent à l'agriculture ; ainsi, le pastoralisme des prés-salés donne un exemple d'une pratique agricole avec des moutons élevés et nourris avec la flore halophile adaptée à la salinité du sol, à la submersion et la sécheresse parmi lesquelles la puccinellie (Puccinellia maritima, une graminée), le troscart (Triglochin maritima) ou l'obione (Halimione portulacoïdes).

La présence de sel dans le sol impacte son potentiel hydrique. Ce potentiel est l'énergie qu'il faut appliquer au sol pour libérer 1g d'eau. Il est toujours négatif, et est d'autant plus bas que la liaison entre l'eau et le sol est forte. L'eau pure possède un potentiel hydrique de 0, mais dans un sol, l'eau n'est pas pure et contient aussi des solutés, responsables de la baisse du potentiel hydrique. Il est donc défini :
- par sa teneur en eau. Ainsi un sol bien hydraté aura un potentiel hydrique avec des valeurs d'environ -0,1 MPa, alors qu'un sol sec aura des valeurs d'environ -1 MPa.
- par la concentration en solutés du sol. Ainsi, cette valeur peut atteindre environ -0,4 MPa dans un sol contaminé par une solution saline à 150 mM NaCl.

Pour comprendre l'importance de ces paramètres physico-chimiques dans les problèmes de salinité, il faut prendre en compte le potentiel hydrique des cellules racinaires. En conditions normales, ces dernières présentent une valeur de potentiel hydrique d'environ -0,5 MPa.

Le mouvement de l'eau va du potentiel le plus haut vers le potentiel le plus bas (en d'autres termes du moins négatif au plus négatif). La différence de potentiels hydriques entre le sol et les cellules végétales (0,4 MPa) va permettre à l'eau d'aller du sol (-0,1 MPa) vers les cellules racinaires (-0,5 MPa).

Lorsque le sol est contaminé par une solution saline à 150 mM NaCl, cette différence de potentiels hydriques se réduit à 0,1 MPa . Or cette différence de potentiel hydrique est l'une des forces motrices des flux d'eau au travers de la membrane cellulaire. On peut estimer qu'en dehors de toute réponse cellulaire adaptative à la salinité, ce moteur est 4 fois moins efficace pour transférer l'eau du sol vers l'intérieur des racines en conditions de salinité par rapport à la condition normale.

Dans une situation extrême où la salinité du sol serait plus importante, on pourrait assister théoriquement à une sortie de l'eau des cellules racinaires vers le sol salin, et à une déshydratation de la plante par ses racines. Ce phénomène rappelle celui du stress hydrique qui peut avoir plusieurs causes (sécheresse, gel, ...) et intervient lorsque le sol n'est pas en capacité de fournir suffisamment d'eau liquide aux racines pour assurer l'hydratation des tissus et l'évaporation par les feuilles. Les dommages dus à l'effet osmotique de la salinité impactent non seulement la turgescence des cellules, mais induisent des changements métaboliques similaires à ceux causés par le stress hydrique. Par exemple, le stress osmotique a un effet immédiat sur le taux de croissance des plantes.

En plus de subir un stress osmotique empêchant l'absorption normale de l'eau au niveau des cellules racinaires, la plante doit affronter des désordres dans ses parties foliaires. Ainsi notamment, la photosynthèse est altérée, à cause de la fermeture des stomates, phénomène contrôlé par l'hormone acide abscissique, et l'inhibition de la fixation du CO₂.

La conséquence immédiate de ces désordres dans la photosynthèse est la production de formes activées de l'oxygène et l'expression des enzymes impliquées dans la prise en charge du stress oxydatif pour empêcher les dommages aux photosystèmes, lipides, protéines et acides nucléiques. Cependant, l'une de ces formes, le peroxyde d'hydrogène (H2O2), présente également un rôle de signalisation cellulaire dans la tolérance au sel. Ainsi, il y a un mécanisme de coordination entre la production de formes activées de l'oxygène, leur élimination par des enzymes et une quantité suffisante requise pour la signalisation cellulaire.

Reste que les plantes ont développé plusieurs mécanismes biochimiques et moléculaires pour résister aux effets néfastes de la salinité du sol.

Les composantes d'un stress salin peuvent être regroupées en deux catégories :
- Le stress oxydatif rencontré lors du stress salin doit être géré au niveau cellulaire par des mécanismes de protection et de réparation des dommages.
- La réponse au stress osmotique permet de maintenir l'homéostasie de l'eau par une biosynthèse de solutés compatibles et l'implication des aquaporines (canaux d'eau).

Ces mécanismes impliquent la fonction et la régulation des systèmes de transport du Na+ et/ou du K+ impliqués dans la réponse au stress ionique.

Ainsi, le stress oxydatif, causé par le stress salin, chez des plantules de maïs a été observé principalement dans les racines et les feuilles matures, et dans une moindre mesure dans les jeunes feuilles. Diverses stratégies de détoxications ont alors été mises en place :
- Augmentation de la teneur en H₂O₂ et des marqueurs de dommages oxydatifs des membranes cellulaires (fuite d'électrolytes et peroxydation lipidique).
- Accumulation dans les cellules de molécules anti-oxydantes (polyphénols, flavonoïdes, ascorbate, ...) et d'activités enzymatiques antioxydantes (catalase, superoxyde dismutase, peroxydase).

Des mécanismes de protection des formes activées de l'oxygène peuvent ainsi être activés dans toute la plante, comme c'est le cas dans de nombreuses autres situations de stress.

Pour résumer :
- L'ion sodium (Na+) est le principal responsable de la toxicité due au sel en perturbant :
   - l'absorption en eau et en nutriments par les racines ;
   - la photosynthèse dans les feuilles ;
   - mais aussi en accumulant des formes activées de l'oxygène conduisant à un stress oxydatif.
- Du fait de leurs propriétés physico-chimiques similaires, Na+ entre en compétition avec l'ion potassium (K+), un élément nutritif majeur chez les plantes.
- Les plantes réagissent à la présence de Na+ en plusieurs étapes :
   - En se protégeant contre le stress oxydatif ;
   - En accumulant des solutés pour contrecarrer l'effet osmotique qu'exerce une quantité trop importante de Na+ dans le sol ;
   - En limitant l'absorption de Na+ dans la racine, en augmentant son expulsion en dehors des cellules racinaires, le confinant dans la vacuole, et en gérant son transport et son exclusion hors des feuilles. La plante améliore aussi sa nutrition en K+.

La présente invention s'attache donc à proposer de nouvelles conditions de culture de végétaux, notamment en conditions hydroponiques.

Mais il est bien entendu que si les conditions hydroponiques sont tout particulièrement intéressantes pour la mise en œuvre de la présente invention, la présente invention trouve son application beaucoup plus largement dans d'autres types de cultures y compris de la culture en champs, en pleine terre, avec des méthodes d'arrosage très variées, et notamment l'irrigation par gravité (très facile à mettre en place et peu coûteuse en termes d'infrastructure) et l'irrigation en goutte à goutte qui utilise très efficacement l'eau en fournissant directement de l'eau en gouttes aux racines des plantes, et qui réduit les pertes par évaporation et peut être automatisée.

Comme on le verra plus en détails dans ce qui suit, on propose selon la présente invention d'effectuer une désoxygénation de l'eau irrigant les cultures, par balayage (on dit aussi « stripage ») à l'aide préférentiellement d'azote ou d'un mélange gazeux comprenant de l'azote, préférentiellement de l'azote et de l'hydrogène, ceci pour favoriser et permettre que cette culture puisse se faire en présence d'eau salée (typiquement allant de 1 à 3,5% de sel).

On souhaite évidemment pouvoir s'approcher de la teneur en sel de l'eau de mer , mais raisonnablement on préfère selon la présente invention se situer entre 50 % et 100% de la teneur de l'eau de mer, sachant que la salinité moyenne des océans est de l'ordre de 35 g/l , et reste généralement comprise entre 30 g/l et 40 g/l, on préfèrera dès lors selon la présente invention se situer dans des eaux ne dépassant pas 17 à 35 g/l de sel.

On souhaite ainsi grâce à l'invention supprimer ou limiter sensiblement l'oxygène dissous présent dans l'eau de mer ou l'eau saumâtre mise en œuvre pour la culture considérée, ceci par un procédé de stripage : Il s'agit d'extraire les gaz dissous dans l'eau pour les faire passer en phase gazeuse afin d'obtenir une eau à faible concentration en gaz dissous oxygène . Ces gaz extraits de la phase liquide sont entraînés par un important débit d'eau (à vitesse préférentiellement supérieure à 2m/s).

En quelque sorte si comme on l'a vu le problème majeur de l'eau saumurée ou salée est lié à un stress oxydatif généré sur la plante, en présence de trop d'élément oxydatif il est avantageux de tenter de supprimer l'oxygène présent naturellement dans l'eau par un procédé de remplacement (stripage), certes les formes activées de l'oxygène seront toujours présentes , mais il n'y aura alors pas le désavantage d'un cumul des deux formes.

L'application des lois de transfert montre que pour obtenir un niveau très bas en gaz dissous, on doit abaisser la fraction molaire du gaz considéré dans la phase gazeuse d'entraînement : d'où le fait de privilégier un stripage de l'oxygène par de l'azote ou un mélange d'azote et d'hydrogène.

Pour des raison de facilité de gestion de l'aspect sécuritaire, on privilégiera selon l'invention des mélanges gazeux ne dépassant pas 3,5% d'hydrogène.

On l'a donc vu ci-dessus, on privilégie selon la présente invention l'application aux cultures hydroponiques.

On rappelera ici que l'hydroponie est la culture de végétaux sans sol, et dans l'eau. Les racines des plantes plongent dans un substrat inerte irrigué par une solution nutritive, ou trempent simplement dans celle-ci. Le substrat sert, le cas échéant, uniquement de support, et peut être constitué de pouzzolane, perlite, vermiculite, billes d'argile, mousse synthétique, sphaigne, fibre de coco, ou encore laine de roche. Le système fonctionne typiquement en circuit fermé : la solution nutritive est pompée et recyclée, et renouvelée régulièrement.

On notera que maintenant, bon nombre de cultures potagères sont réalisées en hydroponie : c'est notamment le cas des légumes fruits et des légumes feuilles telles que tomates (70% des tomates produites en France seraient "hydroponiques") et laitues essentiellement, mais aussi concombres, aubergines, poivrons, diverses salades et herbes aromatiques... etc...

Les fraises sont également de bonnes candidates à la culture hors-sol.

L'hydroponie offre deux intérêts majeurs :
- pouvoir produire même sans sol (intérêt notamment pour les pays où les terres fertiles sont rares et où la sécheresse est trop importante, où s'exerce la nécessité d'être auto-suffisants sur certaines cultures nourricières, agriculture urbaine...) et
- gagner en productivité (croissance rapide, rendements élevés, culture possible à la verticale, d'où un gain d'espace...).

En outre, avec la culture hydroponique, les plantes ne sont pas en concurrence avec les adventices (ne nécessitant pas en conséquence de désherbage ou d'herbicide), et la pression parasitaire est faible (pas de germes ni d'insectes indésirables véhiculés par le sol), le recours aux insecticides et fongicides est donc théoriquement très réduit. Et dans la mesure où les plantes ne poussent pas dans le sol, la terre et les nappes phréatiques ne sont en principe pas polluées par des engrais ou des pesticides.

La présente invention concerne alors un procédé de culture de végétaux, où les végétaux sont alimentés en eau durant des phases d'irrigation de durée déterminée, l'eau mise en œuvre étant une eau salée ou saumâtre, eau qui comporte une teneur donnée en oxygène dissous, se caractérisant en ce que l'on procède, avant l'arrivée de l'eau au poste d'utilisation par l'installation de culture de végétaux, à une étape de stripage de tout ou partie de l'oxygène dissous par de l'azote ou un mélange d'azote et d'hydrogène.

## Revendications

1. Procédé de culture de végétaux, où les végétaux sont alimentés en eau durant des phases d'irrigation de durée déterminée, l'eau mise en œuvre étant une eau salée ou saumâtre, eau qui comporte une teneur donnée en oxygène dissous, **se caractérisant en ce que** l'on procède, avant l'arrivée de l'eau au poste d'utilisation par l'installation de culture de végétaux, à une étape de stripage de tout ou partie de l'oxygène dissous par de l'azote ou un mélange d'azote et d'hydrogène.

2. Procédé selon la revendication 1, **se caractérisant en ce que** la teneur en sel de la dite eau est située dans la gamme allant de 1 à 10 g/l de sel.

3. Procédé selon la revendication 1, **se caractérisant en ce que** la teneur en sel de la dite eau est située dans la gamme allant de 17 à 35 g/l de sel.

4. Procédé selon l'une des revendications précédentes, **se caractérisant en ce que** ladite culture de végétaux est une culture en milieu contrôlé, parmi les modes suivants : sous serre, en cave à l'abri de la lumière, en mode hors sol, en mode hydroponie, aquaponie, aéroponie, ou encore bioponie ou autre.

5. Procédé selon l'une des revendications 1 à 3, **se caractérisant en ce que** ladite culture de végétaux est une culture réalisée en champs, en pleine terre, mettant en œuvre une irrigation par gravité ou une irrigation en goutte à goutte.

6. Procédé selon l'une des revendications précédentes, **se caractérisant en ce que** l'on met en œuvre un mélange d'azote et d'hydrogène à une teneur ne dépassant pas 3,5% d'hydrogène.
